# EUROPÄISCHE PATENTSCHRIFT

(11) **EP 2 258 562 B1**
(45) Veröffentlichungstag und Bekanntmachung des Hinweises auf die Patenterteilung: **25.02.2015**
(21) Anmeldenummer: 10005718.1
(22) Anmeldetag: 02.06.2010
(51) Int. Cl.: B42D 25/00, G06K 19/073, G06K 19/077, B42D 15/00

(54) **Sicherheitsdokument**
Security document
Document de sécurité

(30) Priorität: 03.06.2009 DE 102009023715
(43) Veröffentlichungstag der Anmeldung: 08.12.2010
(73) Patentinhaber: Leonhard Kurz Stiftung & Co. KG, 90763 Fürth (DE)
(72) Erfinder: Peters, John Anthony, 8804 Au/Schweiz (CH); Schindler, Ulrich, 90762 Fürth (DE)
(74) Vertreter: Louis Pöhlau Lohrentz

(56) Entgegenhaltungen:
- WO-A1-2009/026182
- DE-A1-102005 050 099
- DE-A1-102007 027 838
- DE-U1-202007 007 418
- US-A1- 2007 164 866
- US-A1- 2008 001 844

## Beschreibung

Die Erfindung betrifft ein Sicherheitsdokument in Form eines Heftes, welches eine Vielzahl von Blättern aufweist, die miteinander zum Heft verbunden sind, und die weiter einen Transponder aufweist.

Ein derartiges Sicherheitsdokument ist beispielsweise aus der US 7,083,083 B2 bekannt. Dort wird beschrieben, auf einer Seite eines Dokuments einen Transponder anzuordnen und auf einer anderen Seite des Dokuments ein aus einer durchgehenden Metallschicht bestehendes Abschirmelement vorzusehen. Das Abschirmelement ist hierbei so auf der Seite des Dokuments angeordnet, dass beim Zusammenklappen des Dokuments, d.h. wenn das Dokument geschlossen wird, das Abschirmelement den Transponder mindestens bereichsweise überdeckt. Hierdurch soll bewirkt werden, dass das Abschirmelement ein Auslesen des Transponders bei geschlossenem Dokument verhindert, indem es das vom Lesegerät übermittelte Signal absorbiert.

Ein Sicherheitsdokument mit den Merkmalen des Oberbegriffs des Anspruchs 1 ist aus US 2008/001844 A1 bekannt.

Der Erfindung liegt nun die Aufgabenstellung zugrunde, ein verbessertes Sicherheitsdokument bereit zu stellen.

Diese Aufgabe wird von einem Sicherheitsdokument, gemäß den Merkmalen des Anspruchs 1, in Form eines Heftes, welches eine Vielzahl von Blätter aufweist, die miteinander zu dem Heft verbunden sind, gelöst, bei dem vorgesehen ist, dass ein erstes Blatt des Sicherheitsdokuments eine Trägerschicht, eine in einem ersten Bereich angeordnete Antennenstruktur zur RF-Kommunikation (RF = Radio Frequency) und eine mit der Antennenstruktur verbundene elektronische Schaltung mit einer Speichereinrichtung zur Speicherung von Daten und einer mit der Antennenstruktur verbundenen Kommunikationseinrichtung zur Übermittlung von in der Speichereinrichtung gespeicherten Daten mittels der Antennenstruktur über eine Funkschnittstelle an ein Lesegerät aufweist, dass ein zweites Blatt des Sicherheitsdokuments eine Trägerschicht und ein oder mehrere elektrisch leitfähige Schichten aufweist, die in einem zweiten Bereich zur Ausbildung mindestens eines LCR-Schwingkreises (LCR-Schwingkreis = Schwingkreis mit wenigstens einem induktiven Element (L), wenigstens einem kapazitiven Element (C) und wenigstens einem resistiven (Widerstands)-Element (R)) ausgeformt sind, und dass die Antennenstruktur und der mindestens eine LCR-Schwingkreis so auf der jeweiligen Trägerschicht angeordnet sind, dass, wenn das Heft geschlossen ist, der erste Bereich des ersten Blattes und der zweite Bereich des zweiten Blattes sich zumindest bereichsweise überlappen und der mindestens eine LCR-Schwingkreis mit der Antennenstruktur elektromagnetisch gekoppelt ist. Die elektromagnetische Kopplung kann dabei insbesondere eine induktive oder kapazitive Wechselwirkung zwischen der Antennenstruktur und dem LCR-Schwingkreis sein.

Durch die Erfindung wird einerseits erreicht, dass im geöffneten Zustand des Heftes oder Buches die in der Speichereinrichtung gespeicherten Daten über die Kommunikationseinrichtung mittels des Lesegerätes ausgelesen werden können und, wenn das Heft oder das Buch geschlossen ist, ein Auslesen der in der Speichereinrichtung gespeicherten Daten erschwert bzw. verhindert wird. So haben Untersuchungen gezeigt, dass die oben beschriebene Maßnahme, bei der eine vollflächige elektrisch leitfähige Schicht zur Absorption des von dem Lesegerät gesendeten Lesesignals eingesetzt wird, nur dann wirksam ist, wenn diese vollflächige Metallschicht zwischen Lesegerät und Transponder angeordnet ist. Wird somit die Position des Lesegerätes entsprechend verändert und das Lesegerät beispielsweise auf der von der absorbierenden Metallschicht abgewandten Seite des Transponders angeordnet, so ist ein Auslesen des Transponders nach wie vor möglich. Durch die Erfindung wird hingehen ein Auslesen des Transponders unabhängig von der Position des Lesegerätes erschwert bzw. verhindert. Dadurch, dass der LCR-Schwingkreis beim Schließen des Dokuments in Überlappung mit der Antennenstruktur gebracht wird und elektromagnetisch mit der Antennenstruktur gekoppelt wird, wird der Antennen-Schwingkreis der Kommunikationseinrichtung verstimmt und damit die RF-Kommunikation mit dem Lesegerät unabhängig von der Positionierung des Lesegerätes erschwert bzw. verhindert. Die Verstimmung des Antennen-Schwingkreises bedeutet eine gezielte Veränderung der Resonanzfrequenz des Antennen-Schwingkreises bzw. der Gesamtheit aus Antennenstruktur und dem damit elektromagnetisch gekoppelten LCR-Schwingkreis. Die Resonanzfrequenz wird insbesondere entweder vergrößert oder verkleinert.

Die Erfindung zeichnet sich weiter dadurch aus, dass durch sie eine Verhinderung oder Erschwerung des Auslesens von Daten aus dem Speicher im geschlossenen Zustand des Sicherheitsdokuments besonders kostengünstig und im Wesentlichen verschleißfrei und unabhängig von Umwelteinflüssen erreicht werden kann: So sind keine aktiven elektrischen Bauelemente, Schalter und ähnlich teuere und fehleranfällige Teile notwendig. Die Materialmenge für die zusätzlich vorzusehende, musterförmig ausgeformte elektrisch leitfähige Schicht(en) ist neben der für die zusätzliche(n) Schicht(en) benötigte Schichtdicke sehr gering, so dass mit vergleichsweise sehr geringem Materialaufwand dieser Vorteil erzielt werden kann. Im Weiteren wird durch diese zusätzlichen Massnahmen die Schichtdicke des zweiten Blattes nur unwesentlich beeinflusst, so dass seine Integration in bestehende Sicherheitsdokumente ohne Veränderung deren prinzipiellen Aufbaus oder deren taktilen Eigenschaften möglich ist.

Vorteilhafte Ausführungsformen der Erfindung sind in den Unteransprüchen bezeichnet.

Gemäß eines bevorzugten Ausführungsbeispiels der Erfindung weist der mindestens eine LCR-Schwingkreis eine Resonanzfrequenz auf, welche sich um mindestens 10%, bevorzugt um mindestens 25% von der für die RF-Kommunikation zwischen Lesegerät und Kommunikationseinrichtung verwendeten Trägerfrequenz (z. B. 13,56 MHz) und/oder der Resonanzfrequenz des die Antennenstruktur umfassenden Antennen-Schwingkreises im offenen Zustand des Heftes unterscheidet. Weiter bevorzugt beträgt dieser Unterschied zwischen 25 % und 75 %, insbesondere zwischen 50 % und 60 %, weiter bevorzugt zwischen 10 % und 85 %, insbesondere zwischen 19 % und 34 %.

Wird das Heft geöffnet, so dass sich das erste Blatt und das zweite Blatt nicht mehr überlappen, so ist die Antennenstruktur nicht mehr elektromagnetisch mit dem mindestens einen LCR-Schwingkreis gekoppelt und der Antennen-Schwingkreis weist so seine auf die Trägerfrequenz der RF-Kommunikation zwischen Lesegerät und Kommunikationseinrichtung abgestimmte Resonanzfrequenz auf, so dass eine RF-Kommunikation zwischen Lesegerät und Kommunikationseinrichtung möglich ist. Wird das Heft geschlossen, so dass sich das erste und das zweite Blatt überlappen, so wird der LCR-Schwingkreis mit der Antennenstruktur gekoppelt und der Antennen-Schwingkreis durch diese Kopplung verstimmt. Durch die oben angeführte Bemessung des mindestens einen LCR-Schwingkreises wird in den meisten Fällen sichergestellt, dass die Verstimmung des Antennen-Schwingkreises bei geschlossenem Heft so groß ist, dass eine RF-Kommunikation zwischen Lesegerät und Kommunikationseinrichtung sicher verhindert wird.

Vorzugsweise wird die Resonanzfrequenz des LCR-Schwingkreises so gewählt, dass bei elektromagnetischer Kopplung des LCR-Schwingkreises mit der Antennenstruktur in der "Geschlossen"-Stellung des Heftes die Resonanzfrequenz des Antennen-Schwingkreises so verstimmt wird, dass die Resonanzfrequenz des Antennen-Schwingkreises zwischen 25 % und 75 %, insbesondere zwischen 30 % und 50 % verschoben wird und/oder die Resonanzfrequenz zwischen 2 MHz und 12 MHz, insbesondere zwischen 8 MHz und 10 MHz verschoben wird, vorzugsweise die Resonanzfrequenz des Antennen-Schwingkreises bis auf mindestens einen Wert vom 10 % der Trägerfrequenz reduziert oder auf mindestens einen Wert von 47 % der Trägerfrequenz erhöht, bevorzugt auf einen Wert von 41 % reduziert oder auf 84 % der Trägerfrequenz erhöht wird. Bei einer Trägerfrequenz von etwa 13,56 MHz ist es so vorteilhaft, wenn die Resonanzfrequenz des Antennenschwingkreises auf weniger als 12 MHz, weiter bevorzugt weniger als 8 MHz oder mehr als 20 MHz, weiter bevorzugt mehr als 25 MHz verstimmt wird.

Hierdurch wird eine besonders sichere Unterbindung der Kommunikation zwischen Lesegerät und Kommunikationseinrichtung bei geschlossenem Heft erzielt. Besonders vorteilhaft ist es hierbei, wenn die Verschiebung der Resonanzfrequenz so groß ist, dass eine Dekodierung bzw. eine Kodierung eines Signals mit einer solchen Trägerfrequenz, d.h. einer der Resonanzfrequenzen des verstimmten Antennenschwingkreises entsprechenden Frequenz, durch die Kommunikationseinrichtung nicht mehr möglich ist. Hierdurch wird die Sicherheit weiter verbessert.

Als vorteilhaft hat es sich erwiesen, als LCR-Schwingkreis einen Schwingkreis mit einer Induktivität von 1 µH bis 25 µH, einer Kapazität von 10 pF bis 200 pF und einer Güte von 5 bis 50 zu verwenden. Die Resonanzfrequenz des mindestens einen LCR-Schwingkreises beträgt vorzugsweise zwischen 2 MHz und 12 MHz, weiter bevorzugt zwischen 9 MHz and 11 MHz, weiter bevorzugt zwischen 6 MHz und 8 MHz.

Gemäß eines weiteren bevorzugten Ausführungsbeispiels sind die Außendimensionen des mindestens einen LCR-Schwingkreises vorteilhafterweise um mindestens 5 % größer als die Außendimensionen der Antennen-Struktur.

Gemäß eines weiteren bevorzugten Ausführungsbeispiels werden neben den LCR-Element bzw. Elementen in unmittelbarer räumlicher Nähe zusätzliche Abschirmelemente, die unterschiedlichste Form, Anordnung und Ausführung haben können, mit eingesetzt und sind dabei so ausgeformt, dass sie das vom Lesegerät übermittelte Signal absorbieren.

Gemäß eines weiteren bevorzugten Ausführungsbeispiels werden neben den LCR-Element bzw. Elementen in unmittelbarer räumlicher Nähe zusätzliche Abschirmelemente, die unterschiedlichste Form, Anordnung und Ausführung haben können, mit eingesetzt und sind dabei so ausgeformt, dass sie das vom Lesegerät übermittelte Signal absorbieren und sich zudem über die Faltlinien bis in den Bereich der Antennenstruktur erstrecken.

Gemäß der Erfindung weist der mindestens eine LCR-Schwingkreis ein oder mehrere spulenförmige Leiterstrukturen auf, welche in der elektrischen leitfähigen Schicht oder welche in den elektrisch leitfähigen Schichten ausgeformt sind und welche jeweils einen ersten Flächenbereich zumindest zu 40 % umschließen, bevorzugt den ersten Flächenbereich zumindest zu 75 % der Seitenfläche umschließen. Unter spiralenförmiger Leiterstruktur wird so eine Leiterstruktur mit einer 75 % Windung oder mehr, d.h. Windungszahl ≥ 0,75 verstanden. Weiter ist es auch vorteilhaft, wenn in der einen oder den mehreren elektrisch leitfähigen Schichten zwei oder mehr spulenförmige Leiterstrukturen abgeformt sind. Durch diese spulenförmigen Leiterstrukturen wird zum einen eine ausreichende Induktivität des LCR-Schwingkreises erzielt und zum anderen eine induktive Kopplung zwischen Antennenstruktur und LCR-Schwingkreis als elektromagnetische Kopplung ermöglicht.

Vorzugsweise weisen die spulenförmigen Strukturen jeweils zwischen 0,75 und 30 Windungen, weiter bevorzugt zwischen 6 und 10 Windungen, weiter bevorzugt zwischen 3 und 10 Windungen auf. Die Windungen der Leiterbahnen jeder der spulenförmigen Strukturen sind vorzugsweise weniger als 0,8 mm voneinander beabstandet, weiter bevorzugt 0,05 mm bis 0,5 mm voneinander bestandet. Vorzugsweise weisen die Leiterbahnen der spulenförmigen Strukturen jeweils eine Breite von weniger als 5 mm, bevorzugt zwischen 0,05 mm und 5 mm, weiter bevorzugt zwischen 0,1 mm bis 3 mm auf.

Gemäß einer weiteren bevorzugten Ausführungsform der Erfindung weist der mindestens eine LCR-Schwingkreis zwei oder mehrere spulenförmige Leiterstrukturen auf, welche in verschiedenen elektrisch leitfähigen Schichten ausgebildet sind und welche so angeordnet sind, dass sie einen gemeinsamen ersten Flächenbereich umschließen. Hierdurch kann die kapazitive Ankopplung des LCR-Schwingkreises und der Antennenstruktur weiter verbessert werden.

Neben einem induktiven Element, welches beispielsweise durch eine oder mehrere der oben beschriebenen spulenförmigen Leiterstrukturen bereit gestellt wird, weist der mindestens eine LCR-Schwingkreis vorzugsweise auch ein kapazitives Element auf, welches durch zwei speziell hierfür vorgesehene in den ein oder mehreren elektrisch leitfähigen Schichten ausgeformten Kondensatorflächen bereit gestellt wird. Vorzugsweise weist der mindestens eine LCR-Schwingkreis hierbei eine erste Kondensatorfläche auf, die in einer ersten der elektrisch leitfähigen Schicht ausgeformt ist, und eine zweite Kondensatorfläche auf, die in einer zweiten der elektrisch leitfähigen Schicht ausgeformt ist. Zwischen der ersten elektrisch leitfähigen Schicht und der zweiten elektrisch leitfähigen Schicht ist mindestens eine dielektrische Schicht, ein Schichtenverbund oder dergleichen angeordnet. Die mindestens eine erste Kondensatorfläche und die mindestens eine zweite Kondensatorfläche überlappen sich weiter zumindest teilweise und bilden so ein kapazitives Element aus. Die Beabstandung der elektrisch leitfähigen Schichten beträgt vorzugsweise zwischen 3 µm und 500 µm, weiter bevorzugt zwischen 12 µm und 200 µm, weiter bevorzugt zwischen 30 µm und 75 µm. Die Länge der Kondensatorflächen beträgt vorzugsweise zwischen 3mm und 75 mm, weiter bevorzugt zwischen 10 mm und 50 mm, deren Breite bevorzugt zwischen 3 mm und 45 mm, weiter bevorzugt zwischen 10 mm und 40 mm. Die Kondensatorflächen können auch eine von einem Rechteck abweichende Form aufweisen und zudem in sich mindestens bereichsweise unterschiedlich ausgeformt sein.

Weiter ist es auch möglich, dass in einer elektrisch leitfähigen Schicht zwei oder mehr derartige Kondensatorflächen ausgeformt sind, welche ein kapazitives Element bereitstellen. Das kapazitive Element kann jedoch im weiteren auch durch die Zwischenwindungs-Kapazität zwischen Windungen oder Leiterbahnbereichen einer spulenförmigen Leiterstruktur oder zwischen Windungen oder Leiterbahnabschnitten benachbarter, insbesondere übereinander oder mindestens bereichsweise übereinander angeordneter spulenförmiger Leiterstrukturen bereit gestellt werden.

Die Schichtdicke der elektrisch leitfähigen Schicht beträgt vorzugsweise weniger als 30 µm, weiter bevorzugt weniger als 8 µm, weiter bevorzugt zwischen 6 µm und 12 µm oder 6 µm und 16 µm. Die elektrisch leitfähige Schicht besteht hierbei aus einem elektrisch leitenden Material, beispielsweise Graphit, einem Metall, beispielsweise Kupfer oder Aluminium, einem elektrisch leitfähigen Kunststoff, beispielsweise PEDOT:PSS (Poly(3,4-ethylenedioxythiophene) poly(styrenesulfonate)), oder einem transparenten elektrisch leitfähigen Material (ITO = Indium Tin Oxide (Indiumzinnoxid), IMI = Indium tin oxide/Metal/Indium tin oxide) oder auch aus einem elektrisch halbleitendem Material, beispielsweise Silizium oder Kombinationen davon.

Vorzugsweise weist das zweite Blatt zwei oder mehrere elektrisch leitfähige Schichten auf, zwischen denen zumindest eine dielektrische Schicht angeordnet ist. Diese mindestens eine dielektrische Schicht besteht vorzugsweise aus der Trägerschicht des zweiten Blattes, die so zwischen den zwei elektrisch leitfähigen Schichten angeordnet ist.

Bei einer derartigen Anordnung ist es weiter vorteilhaft, wenn das zweite Blatt ein oder mehrere elektrisch leitfähige Durchkontaktierungen durch die zwischen den zwei elektrisch leitfähigen Schichten angeordneten Schichten des zweiten Blattes aufweist.

Das zweite Blatt besteht somit vorzugsweise aus der Trägerschicht, aus ein oder zwei elektrisch leitfähigen Schichten, welche durch zumindest eine dielektrische Schicht voneinander getrennt sind und ein oder mehreren weiteren Schichten, wobei die zwei elektrisch leitfähigen Schichten durch zumindest eine elektrisch leitfähige Durchkontaktierung bereichsweise miteinander verbunden sind.

Gemäß eines bevorzugten Ausführungsbeispiels der Erfindung ist der mindestens eine LCR-Schwingkreis - wie bereits oben ausgeführt - induktiv mit der Antennenstruktur gekoppelt, wenn das Heft geschlossen ist. Eine derartige induktive Kopplung hat den Vorteil, dass die Distanz zwischen dem ersten und zweiten Blatt den Kopplungsfaktor nur in einem Distanzbereich von 1 mm bis 5 mm nur geringfügig beeinflusst und damit zum Einen eine variable Anzahl von Blättern zwischen dem ersten und zweiten Blatt angeordnet sein kann, ohne den Grad der Verstimmung wesentlich zu beeinflussen und zum Anderen auch Umwelteinflüsse nur geringen Einfluss auf den Kopplungsfaktor besitzen.

Vorteilhaft ist hierbei, wenn die Antennenstruktur ebenfalls eine spulenförmige Struktur aufweist, welche einen zweiten Flächenbereich zumindest zu 40 %, bevorzugt zumindest zu 75 % umschließt und die so auf der Trägerschicht des ersten Blattes angeordnet ist, dass der erste und der zweite Flächenbereich sich zumindest teilweise überdecken, wenn das Heft geschlossen ist.

In einer weiteren Ausführungsform ist es vorteilhaft, wenn die Außendimensionen des oder der betrachteten LCR-Schwingkreises/Schwingkreise um mindestens 5 % größer sind als die Außendimensionen der Antennen-Struktur. Dies ermöglicht eine noch bessere Kompensation von Änderungen des induktiven Kopplungsfaktors, wenn die Anzahl der Blätter in einem Dokument wie z. B. Sicherheitsdokument für unterschiedliche Applikationen und damit der Abstand zwischen LCR-Schwingkreis und Antennen-Struktur im zugeklappten Zustand des Heftes variiert. Ein Beispiel hierzu wäre ein Reisepass mit 48 Seiten in der normalen Ausführung, weniger Seiten, z. B. 36 Seiten in Ausführung für temporäre Einsätze oder mit mehr als 48 Seiten im Falle des Einsatzes für diplomatische Zwecke.

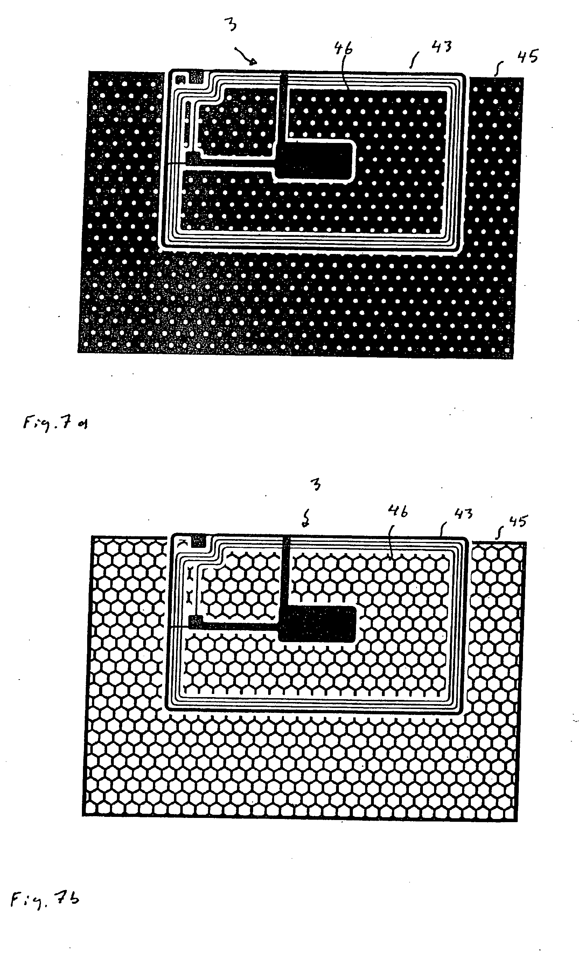

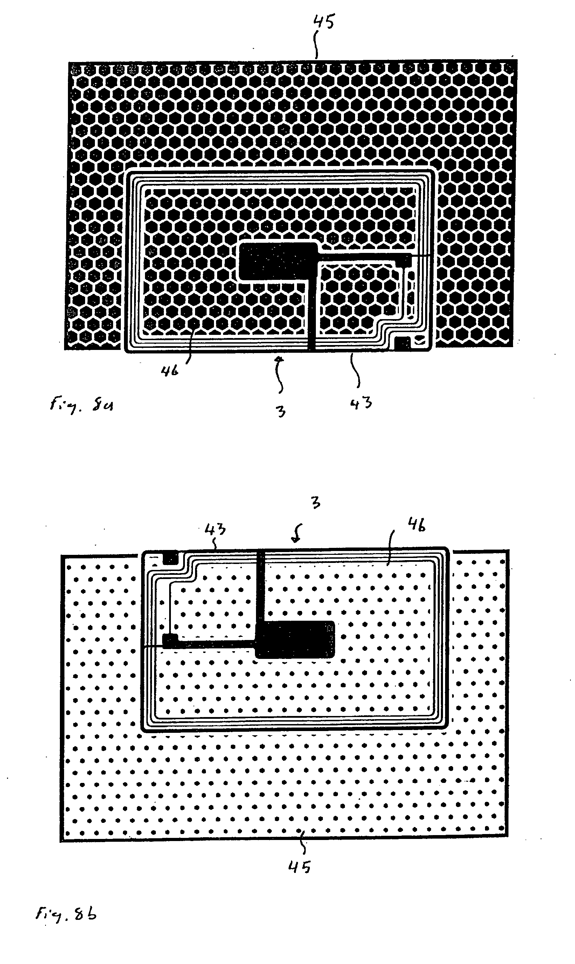

Eine weitere Ausführung besteht darin, dass neben den LRC-Element bzw. Elementen in unmittelbarer räumlicher Nähe zusätzliche Abschirmelemente, die unterschiedlichste Form, Anordnung und Ausführung haben können, mit eingesetzt werden. Diese Abschirmelemente sind dabei so ausgeformt, dass sie das vom Lesegerät übermittelte Signal absorbieren (siehe Fig. 7a, 7b, 8a und 8b). Auch diese Ausführung ermöglicht eine Kompensation von Änderungen des induktiven Kopplungsfaktors, wenn die Anzahl der Blätter in einem Dokument wie z. B. Sicherheitsdokument für unterschiedliche Applikationen und damit der Abstand zwischen LCR-Schwingkreis und Antennen-Struktur im zugeklappten Zustand des Heftes variiert.

Gemäß einer weiteren Ausführungsform der Erfindung ist der mindestens eine LCR-Schwingkreis kapazitiv mit der Antennenstruktur gekoppelt, wenn das Heft oder das Buch geschlossen ist. Durch eine derartige kapazitive Ankopplung wird das Ergebnis der Verstimmung weniger reproduzierbar, was die Sicherheit weiter verbessern kann.

Der LCR-Schwingkreis kann auch aus mehreren getrennten LCR-Schwingkreisen bestehen. Beispielsweise können mehrere LCR-Schwingkreise auf mehreren Blättern des Heftes oder Buches verteilt sein, insbesondere auf Blättern die vor und hinter dem Blatt mit der Antennenstruktur angeordnet sind. Hierbei wird beispielsweise vorgesehen, dass der mindestens eine LCR-Schwingkreis mindestens eine erste Koppelfläche zur kapazitiven Kopplung mit einer mit der Antennenstruktur verbundenen zweiten Koppelfläche aufweist, wobei die erste Koppelfläche in der elektrisch leitfähigen Schicht des zweiten Blattes ausgeformt ist und die zweite Koppelfläche in einer elektrisch leitfähigen Schicht des ersten Blattes ausgeformt ist, und dass die erste und zweite Koppelfläche so angeordnet sind, dass sie sich zumindest bereichsweise überdecken, wenn das Dokument geschlossen ist. Es ist hier auch möglich, dass weitere Koppelflächen wie die erste und zweite Koppelfläche ausgebildet sind. Es ist in diesem Zusammenhang anzumerken, dass eine Krümmung der Blätter natürlich das Ergebnis der kapazitiven Kopplung beeinflussen kann.

Weiter hat es sich auch als vorteilhaft erwiesen, dass der mindestens eine LCR-Schwingkreis über eine Leiterbahn mit der Antennenstruktur verbunden ist.

Gemäß eines bevorzugten Ausführungsbeispiels der Erfindung sind die ein oder mehreren elektrisch leitfähigen Schichten des zweiten Blattes in dem zweiten Bereich zur Ausbildung von zwei oder mehr LCR-Schwingkreisen ausgeformt. Die Antennenstruktur und die zwei oder mehr LCR-Schwingkreise sind hierbei so auf der jeweiligen Trägerschicht angeordnet, dass, wenn das Heft geschlossen wird, der erste Bereich des ersten Blattes und der zweite Bereich des zweiten Blattes sich zumindest bereichsweise überlappen und zumindest eine Teilmenge der zwei oder mehr LCR-Schwingkreise mit der Antennenstruktur elektromagnetisch gekoppelt ist.

Bezüglich der Ausgestaltung der zwei oder mehr LCR-Schwingkreise wird auf obige Ausführungen verwiesen. Besonders vorteilhaft an dieser Ausführungsform ist, dass hierdurch eine besonders starke Verstimmung des Antennen-Schwingkreises erzielt werden kann, und dass im weiteren auch Fertigungstoleranzen hierdurch dahingehend ausgenutzt werden können, dass die Verstimmung des Antennen-Schwingkreises von Sicherheitsdokument zu Sicherheitsdokument variiert und die Sicherheit so weiter verbessert wird. Dieser Effekt tritt vor allem dann vorteilhaft in Erscheinung, wenn in dem zweiten Bereich zwischen 2 und 8 LCR-Schwingkreise, insbesondere zwischen 4 LCR-Schwingkreise und 6 LCR-Schwingkreise angeordnet sind.

Vorzugsweise sind die zwei oder mehr LCR-Schwingkreise gemäß eines ein-, zwei- oder dreidimensionalen Rasters im zweiten Blatt angeordnet. Bei einem eindimensionalen Raster ist eine Abfolge von LCR-Schwingkreisen in eine erste Raumrichtung vorgesehen. Bei einem zweidimensionalen Raster ist eine Abfolge von LCR-Schwingkreisen in zwei Raumrichtungen vorgesehen, welche vorzugsweise senkrecht aufeinander stehen. Bei einem dreidimensionalen Raster ist eine Abfolge von LCR-Schwingkreisen in drei, vorzugsweise senkrecht aufeinander stehenden Raumrichtungen vorgesehen, wobei zwei der Raumrichtungen in der von der Oberfläche des zweiten Blattes aufgespannten Ebene liegen und die dritte Raumrichtung vorzugsweise senkrecht auf dieser Ebene steht, d.h. die LCR-Schwingkreise übereinander angeordnet sind.

Die Rasterweite des Rasters beträgt zumindest in einer Raumrichtung vorzugsweise zwischen 20 mm und 60 mm. Die Rasterweite des Rasters ist weiter bevorzugt in zumindest einer Raumrichtung variiert, insbesondere zufällig variiert.

Durch diese Maßnahmen kann erreicht werden, dass die oben angeführten positiven Effekte besonders deutlich hervortreten.

Die zwei oder mehr LCR-Schwingkreise besitzen vorzugsweise die gleiche Resonanzfrequenz. Weiter ist es aber auch möglich, dass zumindest zwei der zwei oder mehreren LCR-Schwingkreise unterschiedliche Resonanzfrequenzen besitzen. Hierdurch kann die Reproduzierbarkeit des Ergebnisses sowie die Variation der Verstimmung zwischen unterschiedlichen Sicherheitsdokumenten weiter beeinflusst werden.

Gemäß eines weiteren bevorzugten Ausführungsbeispiels der Erfindung sind die ein oder mehreren elektrisch leitfähigen Schichten des zweiten Blattes in einem an den zweiten Bereich angrenzenden und vorzugsweise den zweiten Bereich umschließenden dritten Bereich zur Ausbildung eines RF-Strahlung absorbierenden Schichtbereichs ausgeformt. Die ein oder mehreren elektrisch leitfähigen Schichten sind in dem dritten Bereich so beispielsweise vollflächig ausgeformt. Weiter ist es auch möglich, dass die elektrisch leitfähigen Schichten in diesem Bereich in Form eines gitterförmigen Musters ausgeformt sind, wodurch die Absorption der RF-Strahlung weiter verbessert werden kann.

Vorzugsweise ist das erste Blatt und das zweite Blatt ein Deckblatt des Heftes oder eines Buches, eines ähnlichen mehrseitigen, vorzugsweise gebundenen Dokumentes oder eines Schichtenstapels.

Beispielsweise bildet das zweite Blatt das vordere Deckblatt aus, welches den vorderen Teil des Einbandes des Heftes bildet und das erste Blatt das hintere Deckblatt aus, welches den hinteren Teil des Einbandes des Heftes bildet. Es ist jedoch auch möglich, dass das erste Blatt und/oder das zweite Blatt ein im Inneren des Heftes liegende/liegendes Blätter/Blatt sind/ist. Weiterhin ist es auch möglich, dass das erste und das zweite Blatt aufeinander folgende Blätter des Heftes sind, insbesondere im Falle einer kapazitiven Kopplung zwischen Antennenstruktur und LCR-Schwingkreis in der "Geschlossen"-Stellung.

Gemäß eines weiteren bevorzugten Ausführungsbeispiels der Erfindung weist das zweite Blatt und/oder das erste Blatt ein oder mehrere ein optisch variables Sicherheitsmerkmal ausbildende Schichten auf. Diese Schicht oder diese Schichten ist/sind vorzugsweise aus folgender Gruppe ausgewählt:
Schicht mit einem mikroskopischen oder makroskopischen Oberflächen-Relief, insbesondere Schicht mit einem beugungsoptisch wirkenden Oberflächen-Relief oder einem Oberflächen-Relief in Form von optischen Linsenstrukturen, Mattstrukturen oder Blaze-Gittern, eine Schicht mit einem Dünnfilmschicht-System, welches blickwinkelabhängige Farbverschiebungseffekte generiert, eine Flüssigkristallschicht, insbesondere eine cholesterische und/oder eine nematische Flüssigkristallschicht, und eine Schicht mit optisch aktiven Pigmenten, insbesondere Effektpigmenten für Glanzeffekte, Metalliceffekte oder blickwinkelabhängige Farbverschiebungseffekte, UV- oder IR-aktivierbaren Pigmenten.

Wie bereits oben erwähnt ist von besonderem Vorteil, wenn das zweite Blatt durch die Ausgestaltung gemäß der Erfindung nur einen geringen Schichtdicke-Zuwachs erfährt und somit die Schichtdicke des zweiten Blattes um nicht mehr als ca. 10 % der Schichtdicke der Trägerschicht des zweiten Blattes anwächst.

Vorteilhaft ist hier insbesondere, wenn die ein oder mehreren elektrisch leitfähigen Schichten des zweiten Blattes von einer Schicht einer Übertragungslage einer Transferfolie gebildet sind, die mittels einer Kleberschicht mit der Trägerschicht des zweiten Blattes verbunden ist und die eine Schichtdicke vorzugsweise zwischen 0,5 µm und 100 µm, weiter bevorzugt zwischen 1 und 80 µm, aufweist. Eine derartige Transferfolie kann auf einer Seite der Trägerschicht des Blattes abgeprägt sein oder jeweils eine Übertragungslage einer Transferfolie kann auf der Vorder- und auf die Hinterseite der Trägerschicht des zweiten Blattes abgeprägt sein. Optional ist es hierbei auch möglich, dass zwischen der Trägerschicht und der Übertragungslage weiter noch ein oder mehrere Schichtlagen, insbesondere Druckschichten angeordnet sind.

Eine alternative vorteilhafte Ausführungsform sieht vor, dass die ein oder mehreren elektrisch leitfähigen Schichten des zweiten Blattes auf einer Kunststofffolie ausgebildet sind, die mittels einer Kleberschicht mit der Trägerschicht des zweiten Blattes verbunden ist, und wobei die Kunststofffolie mit den elektrisch leitenden Schichten eine Schichtdicke vorzugsweise zwischen 15 µm und 200 µm, weiter bevorzugt zwischen 10 und 200 µm, aufweist. Eine derartige Kunststofffolie kann auf einer Seite der Trägerschicht des Blattes aufgeklebt sein oder jeweils eine Kunststofffolie kann auf der Vorder- und auf die Hinterseite der Trägerschicht des zweiten Blattes aufgeklebt sein. Optional ist es hierbei auch möglich, dass zwischen der Trägerschicht und der Kunststofffolie weiter noch ein oder mehrere Schichtlagen, insbesondere Druckschichten angeordnet sind.

Weiterhin ist es möglich, dass die Antennenstruktur und der LCR-Schwingkreis auf einer gemeinsamen Kunststofffolie angeordnet sind, wobei die Kunststofffolie in einen Rücken des Sicherheitsdokumentes eingelegt ist und wobei auf einer ersten Hälfte der Kunststofffolie die Antennenstruktur angeordnet ist und auf einer zweiten Hälfte der Kunststofffolie der LCR-Schwingkreis angeordnet ist.

Vorteilhaft ist es hierbei, dass die erste Hälfte der Kunststofffolie mit der Antennenstruktur mit einer ersten Einbandseite des Sicherheitsdokumentes verbunden, insbesondere verklebt ist, und dass die zweite Hälfte der Kunststofffolie mit dem LCR-Schwingkreis mit einer zweiten Einbandseite des Sicherheitsdokumentes verbunden, insbesondere verklebt ist.

Im Folgenden wird die Erfindung anhand von mehreren Ausführungsbeispielen unter Zuhilfenahme der beiliegenden Zeichnungen beispielhaft erläutert.
- Fig.1: zeigt eine Darstellung eines Sicherheitsdokuments.
- Fig. 2: zeigt eine schematische Schnittdarstellung eines Blattes des Sicherheitsdokuments nach Fig. 1.
- Fig. 3: zeigt eine schematische Schnittdarstellung eines Blattes des Sicherheitsdokuments nach Fig. 1 für ein weiteres Ausführungsbeispiel.
- Fig. 4: zeigt eine schematische Schnittdarstellung eines Blattes des Sicherheitsdokuments nach Fig. 1 für ein weiteres Ausführungsbeispiel.
- Fig. 5: zeigt eine schematische Darstellung eines Blattes des Sicherheitsdokuments nach Fig. 1 für ein weiteres Ausführungsbeispiel.
- Fig. 6a bis 6c: zeigen schematische Draufsichten von Schichten des Blattes nach Fig. 5.
- Fig. 7a bis 8b: zeigen schematische Draufsichten auf Schichten eines Blattes des Sicherheitsdokuments nach Fig. 1 für jeweilige weitere Ausführungsbeispiele.
- Fig. 9: zeigt eine schematische Draufsicht auf ein Blatt des Sicherheitsdokuments nach Fig. 1 für ein weiteres Ausführungsbeispiel.

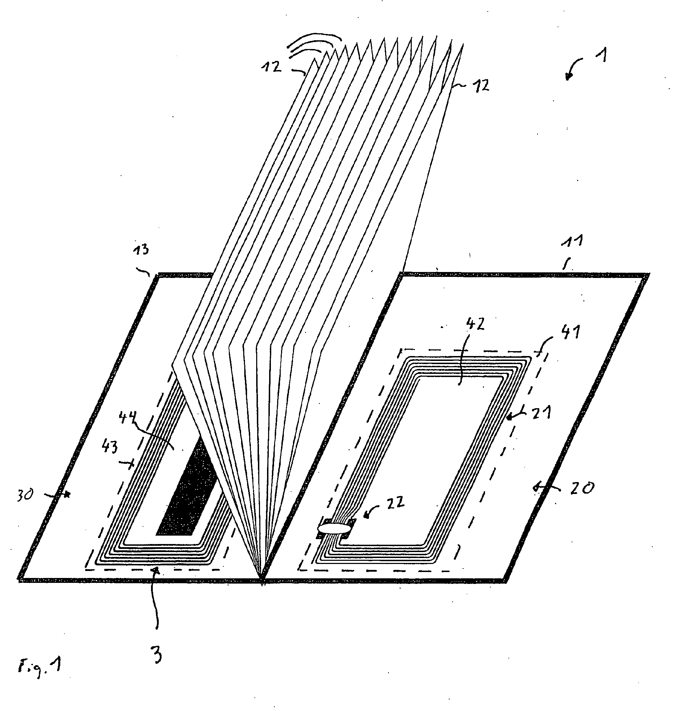

Fig. 1 zeigt ein Sicherheitsdokument 1 in Form eines Heftes. Das Sicherheitsdokument 1 ist beispielsweise ein Pass in Form eines Passbuches, ein Führerschein, ein ID-Dokument, ein Geburts-Zertifikat, ein Software-Zertifikat oder auch ein Wertdokument. Das Sicherheitsdokument weist Blätter 11, 12 und 13 auf, die miteinander zu dem Heft verbunden sind. Die Anzahl der Blätter des Sicherheitsdokuments 1 ist in Fig. 1 beispielhaft gezeigt und es ist weiter auch möglich, dass das Sicherheitsdokument lediglich zwei Blätter, d.h. zwei Seiten, besitzt, die an einem Falz klappbar gegeneinander beweglich sind.

Die Blätter 11, 12 und 13 weisen jeweils eine Trägerschicht aus einem Papiersubstrat auf. Es ist jedoch auch möglich, dass die Trägerschicht aus einer Kunststofffolie, beispielsweise aus einer PET-, PEN- oder BOPP-Folie oder dergleichen, einem Mehrschichtgebilde (Laminat) oder dergleichen, vorzugsweise mit einer Schichtdicke zwischen 10 und 250 µm besteht. Die Blätter 11 bis 13 des Sicherheitsdokuments 1 sind beispielsweise durch Heftung oder Klebung miteinander zu dem Heft verbunden, wie dies in Fig. 1 erkennbar ist. Die Blätter 11 bis 13 weisen neben der Trägerschicht optional noch ein oder mehrere Druckschichten auf, welche insbesondere optisch auslesbare Informationen über den Inhaber des Passes bereitstellen. Die Seiten 11 und 13 sind hierbei speziell ausgestaltet, wie im Folgenden erläutert.

Die Seite 11 weist neben einer Trägerschicht 20 noch eine Antennenstruktur 21 und eine mit der Antennenstruktur 21 verbundene elektronische Schaltung 22 auf. Die Antennenstruktur 21 ist in einem Bereich 41 angeordnet und besteht aus einer musterförmigen Metallschicht beispielsweise in Form einer Antennenspule, wie dies in Fig. 1 angedeutet ist. Die Antennenstruktur ist galvanisch mit der elektronischen Schaltung 22 verbunden, welche beispielsweise in Form eines Mikrochips vorgesehen ist. Der Mikrochip besteht hierbei vorzugsweise aus einem auf Silizium basierendem Chip mit dünn geschliffenem Silizium-Trägersubstrat, oder einem sogenannten Chip-Modul mit einem in ein Epoxydharz eingelassenen Chip-Gehäuse und Lead-Frame. Es ist jedoch auch möglich, dass die elektronische Schaltung 22 aus einer Polymer-Elektronik-Schaltung besteht, welche beispielsweise mittels eines Leitklebers mit der Antennenstruktur 21 verbunden ist. Die elektronische Schaltung 22 kann auch eine Kombination eines konventionellen Mikrochips mit einer Polymer-Elektronik-Schaltung aufweisen. Die elektronische Schaltung 22 umfasst eine Vielzahl von aktiven und passiven elektronischen Bauelementen wie Transistoren, Dioden, Widerständen und Kondensatoren, welche zur Bereitstellung der im Folgenden beschriebenen Funktionen schaltungsgerecht miteinander verbunden sind:

Die elektronische Schaltung weist eine Speichereinrichtung auf, in welcher Daten, insbesondere Daten über den Inhaber des Passes, beispielsweise Angaben zur Person des Inhaber des Passes, biometrische Daten wie Fingerabdruck oder Bild des Inhabers, und ggf. Daten über die Ausleseberechtigung gespeichert sind. Weiter weist die elektronische Schaltung 22 eine Kommunikationseinrichtung auf, welche eine Übermittlung der in der Speichereinrichtung gespeicherten Daten mittels der Antennenstruktur über eine Funkschnittstelle an ein Lesegerät ermöglicht. Die Kommunikationseinrichtung kommuniziert die Daten hierbei auf ein Anforderungssignal von dem Lesegerät hin, basierend auf einem vorgegebenen Kommunikations-Protokoll und Modulations-Verfahren, über die Antennenstruktur an das Lesegerät. Die Kommunikationseinrichtung verfügt so über einen entsprechenden RF-Teil zum Empfangen/Senden von RF-Signalen mittels der Antennenstruktur 21 über die Luftschnittstelle sowie über Baugruppen zur Bearbeitung der für die Kommunikation notwendigen Protokoll-Stacks. Im Weiteren umfasst die elektrische Schaltung 22 vorzugsweise noch Baugruppen zur Durchführung einer gesicherten Kommunikation mit dem Lesegerät, d.h. Baugruppen zur Bearbeitung entsprechender Authentifizierungs-Protokolle und zur Verschlüsselung der über die Luftschnittstelle übermittelten sowie Entschlüsselung der über die Luftschnittstelle empfangenen Daten.

Die Antennenstruktur 42 ist in dem Bereich 41 des Blattes 11 in fester Position zu der Trägerschicht 20 des Blattes 11 angeordnet und beispielsweise mittels einer Kleberschicht mit der Trägerschicht 20 verbunden. Die elektronische Schaltung 22 ist beispielsweise in einer Ausnehmung der Trägerschicht 20 angeordnet. Ober- und unterhalb der Antennenstruktur 21 und der elektronischen Schaltung 22 kann das Blatt 11 noch ein oder mehrere weitere Schichten aufweisen, so dass die Antennenstruktur 21 und die elektronische Schaltung 22 beispielsweise beidseitig von ein oder mehreren vorzugsweise opaken Schichten des Blattes 11 umgeben sind und damit für den Benutzer des Sicherheitsdokuments 1 verborgen bleiben.

Im Weiteren wird von der spulenförmig ausgeformten Antennenstruktur 21 ein Flächenbereich 42 umschlossen.

Im Weiteren ist es jedoch auch möglich, dass die Antennenstruktur 21 nicht die in Fig. 1 gezeigte spulenförmige Formgebung besitzt, sondern eine beliebig andere Formgebung, beispielsweise die Form einer Bipol-, Dipol-, oder Schlitz-Antenne oder einer Mischform verschiedener Antennenformen besitzt. Es ist hierbei auch möglich, dass die Antennenstruktur mehrlagig ausgebildet ist. So ist es beispielsweise möglich, dass die Antennenstruktur aus einem dreilagigen System bestehend aus einem PET-Träger einer Dicke von ca. 50 µm und beidseitig des PET-Trägers aufgebrachten Kupferschichten besteht, welche jeweils zu einer spulenförmigen Leiterstruktur, wie in Fig. 1 angedeutet, ausgeformt sind und der Bereich 41 hierbei eine Fläche von 78 x 48 mm einnimmt. Die beiden Kupferschichten sind über Durchkontaktierungen miteinander verbunden und bilden Kontakt-Pads für die elektronische Schaltung 22, auf die die elektronische Schaltung aufgelötet ist. Der von der Antennenstruktur 21 und den mit der Antennenstruktur verbundenen Komponenten der elektronischen Schaltung 22 gebildete Antennen-Schwingkreis weist hierbei vorzugsweise eine Resonanzfrequenz zwischen 12 und 20 MHz, beispielsweise eine Resonanzfrequenz von 13,56 MHz auf.

Das Blatt 13 weist neben einer Trägerschicht 30 ein oder mehrere elektrisch leitfähige Schichten auf, die in einem Bereich 43 zur Ausbildung mindestens eines LCR-Schwingkreises 3 ausgeformt sind.

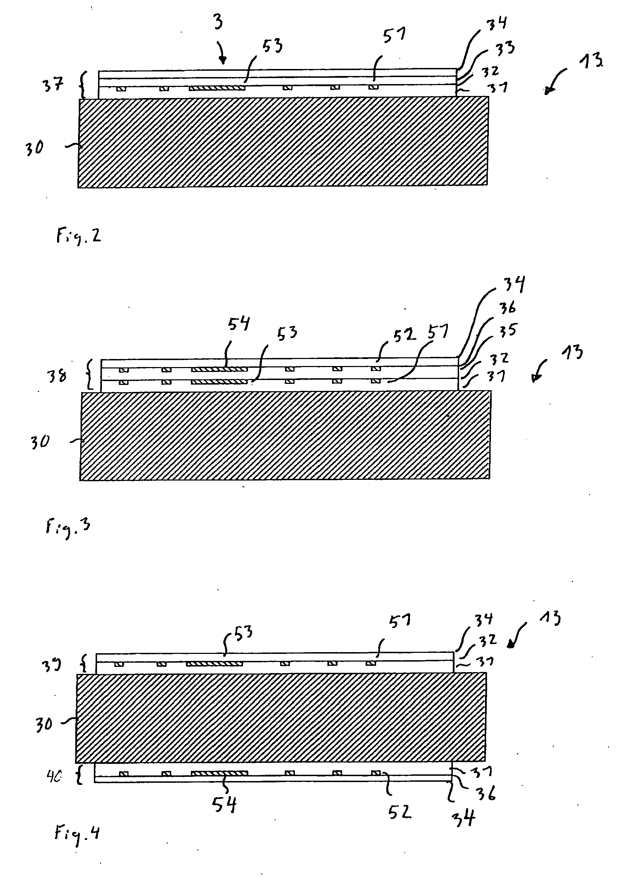

Beispielsweise weist das Blatt 13 den in Fig. 2 gezeigten Schichtaufbau mit der Trägerschicht 30 und dem auf der Trägerschicht 30 applizierten Folienelement 37 auf. Das Folienelement 37 besteht hierbei vorzugsweise aus einer auf die Trägerschicht 30 applizierten Übertragungslage einer Transferfolie, insbesondere einer Heißprägefolie. Die Übertragungslage der Transferfolie weist vorzugsweise mehrere Schichten auf, z.B. aufgedampfte und/oder aufgalvanisierte Metallschichten, aufgedruckte oder auflackierte transparente oder opake Schichten. Das Folienelement 37 kann hierbei auch als eine selbsttragende Kunststofffolie ausgebildet sein und über verschiedene Verfahren aufgebrachte Schichten aufweisen, z.B. aufgedampfte und/oder aufgalvanisierte Metallschichten, aufgedruckte oder auflackierte transparente oder opake Schichten. Das Folienelement 37 kann hierbei vollflächig oder auch nur bereichsweise auf die Trägerschicht 30 appliziert sein, wie dies in Fig. 2 angedeutet ist.

Das Folienelement 37 weist eine Kleberschicht 31, eine elektrisch leitfähige Schicht 32, eine Dekorschicht 33 und eine Schutzlackschicht 34 auf.

Auf die Dekorschicht 33 und die Schutzlackschicht 34 könnte auch verzichtet werden und es könnten neben den in Fig. 2 gezeigten Schichten auch noch weitere Schichten in dem Folienelement 37 vorgesehen sein, beispielsweise weitere Dekorschichten, Haftvermittlungsschichten oder Schutzschichten.

Die elektrisch leitfähige Schicht 32 besteht hier vorzugsweise aus einer Metallschicht, insbesondere einer Kupferschicht einer Schichtdicke zwischen 5 und 20 µm, beispielsweise von 12 µm. Anstelle eines Metalls kann für die elektrisch leitfähige Schicht 32 auch ein anderes leitfähiges oder halbleitendes Material, beispielsweise ein halbleitendes Polymer oder Kombinationen verschiedener leitfähiger Materialien, verwendet werden. Die elektrisch leitfähige Schicht 32 ist hierbei zur Ausbildung eines LCR-Schwingkreises ausgeformt und so beispielsweise in Form einer spulenförmigen Leiterstruktur 51 mit mehreren Windungen und einer mit dieser spulenförmigen Leiterstruktur verbundenen Kondensatorfläche 53 ausgebildet, welche zum einen eine induktive Komponente (durch die spulenförmige Struktur), eine kapazitive Komponente (durch die Zwischenwindungs-Kapazität und die Kapazität der Windungen zu der Kondensatorfläche) sowie eine Widerstands-Komponente (durch den Leitungswiderstand der spulenförmigen Leiterstruktur 51 und der Kondensatorfläche 53) bereit stellen und somit einen LCR-Schwingkreis ausbilden. Die spulenförmige Leiterstruktur 51 besitzt beispielsweise ebenfalls eine Außenabmessung von 78 x 48 mm und die Breite der Leiterbahn der spulenförmigen Leiterstruktur 51 beträgt vorzugsweise zwischen 0,05 mm und 5 mm, beispielsweise 0,65 mm und die Windungen der spulenförmigen Leiterstruktur 51 sind vorzugsweise zwischen 0,05 mm und 1 mm voneinander beabstandet, beispielsweise 0,5 mm voneinander beabstandet. Die Kondensatorfläche 53 besitzt beispielsweise eine Abmessung von 40 x 15 mm. In diesem Zusammenhang wird darauf verwiesen, dass die Darstellung in Fig. 2 wie auch in den folgenden Bildern keine maßstabsgetreuen Darstellungen darstellen, sondern nur eine schematische Darstellung zur Veranschaulichung des Funktionsprinzips darstellt.

Die Kleberschicht 31 weist eine Schichtdicke von 0,5 µm bis 80 µm auf.

Die Dekorschicht 32 besteht beispielsweise aus einer Farblackschicht einer Schichtdicke von 0,5 bis 20 µm. Es ist jedoch auch möglich, dass die Dekorschicht eine ein optisch variables Sicherheitsmerkmal bereitstellende Schicht ist. So ist es beispielsweise möglich, dass die Dekorschicht 33 eine Replizierlackschicht aufweist, in die ein optisch wirksames Oberflächen-Relief abgeformt ist, insbesondere ein mikroskopisches oder makroskopisches Oberflächen-Relief abgeformt ist. Bei einem derartigen Oberflächen-Relief handelt es sich vorzugsweise um ein beugungsoptisch wirksames Oberflächen-Relief, beispielsweise um ein Hologramm oder Kinegram®. Es ist jedoch auch möglich, dass es sich bei dem Oberflächen-Relief um eine mikroskopische oder makroskopische Linsenstruktur, eine Mattstruktur oder um ein Blaze-Gitter handelt. Das Oberflächen-Relief ist hierbei mit einer entsprechenden reflexionserhöhenden Schicht, beispielsweise einer Reflexionsschicht oder einer HRI-Schicht (HRI = High Refractive Index (Schicht mit hohem Brechungsindex)), belegt. Besonders vorteilhaft ist es hierbei, wenn die elektrisch leitfähige Schicht 32 eine Doppelfunktion besitzt und sowohl den LCR-Schwingkreis ausbildet als auch die Reflexionsschicht oder reflexionserhöhende Schicht für die Bereitstellung des optisch variablen Sicherheitsmerkmals ausbildet. Weiter kann die Schicht 33 auch eine Dünnfilmschicht-System zur Generierung von blickwinkelabhängigen Farbverschiebungseffekten beinhalten oder eine Flüssigkristallschicht, eine Schicht mit optisch aktiven Pigmenten, beispielsweise Effektpigmenten, UV-oder IR-aktivierbaren Pigmenten, enthalten. Die Dekorschicht 33 kann auch mehrschichtig aufgebaut sein und so beispielsweise mehrere farbige Lackschichten kombiniert mit ein oder mehreren der oben geschilderten einen optisch variablen Effekt generierenden Schichten beinhalten.

Die Schutzschicht 34 besteht vorzugsweise aus einer Lackschicht einer Schichtdicke von 1 bis 50 µm, vorzugsweise 1 µm bis 15 µm.

Fig. 3 zeigt eine alternative Ausführungsform des Blattes 13. Die Trägerschicht 30 ist hierbei mit einem Folienelement 38 belegt, welches neben den Schichten 31, 32 und 34 nach Fig. 2 noch eine dielektrische Schicht 35 und eine weitere elektrisch leitfähige Schicht 36 aufweist. Bezüglich der Ausgestaltung der Schichten 31, 32, und 34 wird auf die Ausführungen nach Fig. 2 verwiesen. Die weitere elektrisch leitfähige Schicht 35 ist ebenfalls Teil des in dem Bereich 43 ausgebildeten LCR-Schwingkreises und ebenso wie die Schicht 32 in Form einer spulenförmigen Leiterstruktur 52 und einer Kondensatorfläche 54 ausgeformt. Bezüglich der Ausgestaltung der Schicht 36 wird somit ebenfalls auf die Ausführungen zu der Ausgestaltung der Schicht 32 verwiesen. Die elektrisch leitfähigen Schichten 32 und 36 sind miteinander kapazitiv oder induktiv oder auch galvanisch mittels Durchkontaktierungen durch die dielektrische Schicht 35 gekoppelt. Bei der dielektrischen Schicht 35 kann es sich beispielsweise um eine Lackschicht einer Dicke von 3µm bis 12 µm oder auch um eine Kunststofffolie, beispielsweise eine PET-Folie mit einer Schichtdicke von 12 µm bis 200 µm, handeln. Im Weiteren kann zusätzlich zu den in Fig. 3 gezeigten Schichten auch noch ein oder mehrere Dekorschichten in dem Folienelement 38 vorgesehen sein, welche wie die Dekorschicht 33 nach Fig. 2 ausgestaltet sind. Diese Dekorschichten können zwischen jeder der Schichten 34 bis 31 angeordnet sein.

Fig. 4 zeigt eine weitere Ausführungsform des Blattes 13. Auch hier ist beidseitig auf die Trägerschicht 30 ein Folienelement, das Folienelement 39 bzw. das Folienelement 40 appliziert. Das Folienelement 39 weist die Kleberschicht 31, die elektrisch leitfähige Schicht 32 und die Schutzlackschicht 34 auf, welche wie zu Fig. 2 beschrieben ausgebildet sind. Das Folienelement 40 weist die Kleberschicht 31, die elektrisch leitfähige Schicht 36 und die Schutzlackschicht 34 auf, welche wie oben in Bezug auf Fig. 3 bereits beschrieben ausgebildet sind. Im weiteren ist es auch hier möglich, dass neben den in Fig. 4 gezeigten Schichten noch weitere Schichten in den Folienelementen 39 und 40 vorgesehen sind, insbesondere eine Dekorschicht, welche gemäß der Dekorschicht 33 nach Fig. 2 ausgebildet ist.

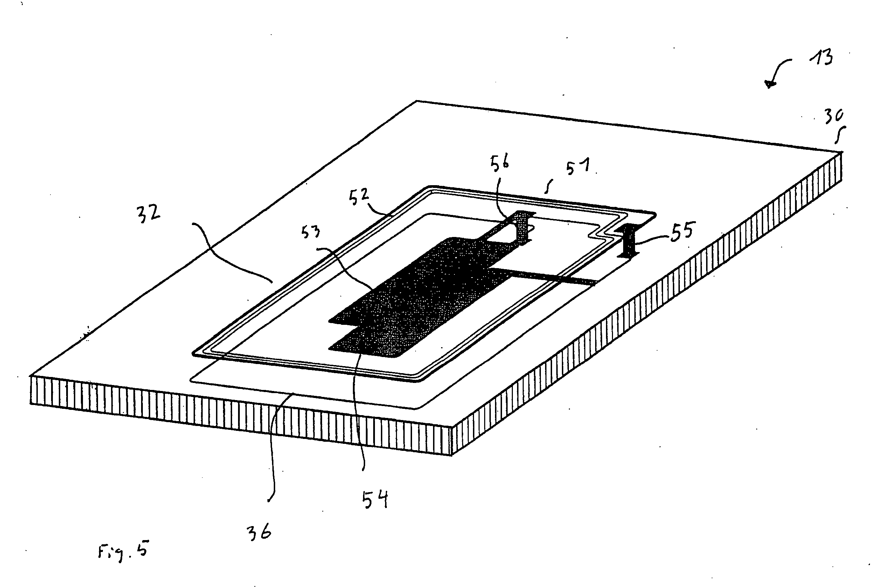

Fig. 5 zeigt eine weitere Ausführungsform des Blattes 13. Auf die Trägerschicht 30 sind hierbei beidseitig elektrisch leitfähige Schichten aufgebracht. Die Trägerschicht 30 besteht so beispielsweise aus einer Kunststofffolie, beispielsweise einer PET-Folie einer Schichtdicke von 12 µm bis 200 µm, vorzugsweise zwischen 30 µm und 75 µm, hier von etwa 50 µm, auf die die bereits oben beschriebenen elektrisch leitfähigen Schichten 32 und 36 aufgebracht sind So ist beispielsweise die Schicht 32 auf der Oberseite und die Schicht 36 auf der Unterseite der Trägerschicht 30 aufgebracht. Die Schichten 32 und 36 können wie oben in Bezug auf Fig. 2 und Fig. 3 erläutert ausgestaltet sein. Besonders vorteilhaft ist es hierbei, wenn die elektrisch leitfähigen Schichten 32 und 36 jeweils aus einer metallischen Schicht bestehen, welche beispielsweise mittels galvanischer Verstärkung eines auf die Trägerschicht 30 aufgebrachten leitfähigen Musters auf der Trägerschicht 30 aufgebaut sind. Wie bereits oben bei den Ausführungen zu Fig. 2 und Fig. 3 beschrieben, ist die elektrisch leitfähige Schicht 32 hierbei in Form einer spulenförmigen Leiterstruktur 51 und einer Kondensatorfläche 53 ausgeformt und die elektrisch leitfähige Schicht 36 in Form einer spulenförmigen Leiterstruktur 52 und einer Kondensatorfläche 54 ausgeformt.

Eine vorteilhafte Ausführungsform sieht vor, dass die Antennenstruktur 21 (sowie die mit der Antennenstruktur 21 verbundene elektronische Schaltung 22) und der LCR-Schwingkreis 3 auf einer gemeinsamen Trägerschicht angeordnet sind, wobei die Trägerschicht in einen Rücken des Sicherheitsdokumentes eingelegt wird (ähnlich wie in Fig. 1 verdeutlicht) und eine erste Hälfte und eine zweite Hälfte aufweist, die optional durch eine Falzung getrennt sind, wobei die erste Hälfte das Trägersubstrat des Blattes 11 und die zweite Hälfte das Trägersubstrat des Blattes 13 ausbildet. Auf der ersten Hälfte der Trägerschicht ist die Antennenstruktur 21 angeordnet und auf der zweiten Hälfte der Trägerschicht ist der LCR-Schwingkreis angeordnet. Dabei ist es vorteilhaft, wenn die erste Hälfte der Trägerschicht 30 mit der Antennenstruktur 21 mit einer ersten Einbandseite des Sicherheitsdokumentes 1 verbunden, inkl. verklebt wird und wenn die zweite Hälfte der Trägerschicht mit dem LCR-Schwingkreis 3 mit einer zweiten Einbandseite des Sicherheitsdokumentes 1 verbunden, inkl. verklebt wird. Durch diese Anordnung der beiden im "Geschlossen"-Zustand des Heftes elektromagnetisch gekoppelten Elemente Antennenstruktur 21 und LCR-Schwingkreis 3 können Antennenstruktur 21 und LCR-Schwingkreis 3 mittels eines gemeinsamen Herstellungsprozesses entsprechend kostengünstig und schnell produziert werden und anschließend einfach und schnell mit dem Sicherheitsdokument verbunden werden. Die gemeinsame Trägerschicht kann in einem Stück in das zu produzierenden Heft eingelegt, verklebt und/oder vernäht/eingeheftet werden und bildet mit dem Heft eine Einheit. Nur unter Zerstörung des Heftes und/oder der Trägerschicht 30 kann bzw. können die Antennenstruktur 21 und der LCR-Schwingkreis 3 aus dem Heft entfernt werden. Insbesondere für den Herstellungsprozesses von Antennenstruktur 21 und LCR-Schwingkreis 3 sowie später des Heftes ergeben sich dadurch Vorteile. Der Herstellungsprozess zur gleichzeitigen Herstellung von Antennenstruktur 21 und LCR-Schwingkreis 3 kann z.B. ein herkömmliches Metallisierungsverfahren/Demetallisierungsverfahren sein (Aufdampfen/Aufdrucken von Metallen und anschließendes Ätzverfahren oder Waschmasken- oder Waschlackverfahren, Aufdampfen/Aufdrucken einer elektrische leitenden Schicht und anschließende galvanische Verstärkung).

Weiter sind die Leiterstrukturen der elektrisch leitfähigen Schichten 32 und 36 mittels zweier Durchkontaktierungen 55 und 56 durch die Trägerschicht 30 miteinander zu einem LCR-Schwingkreis verbunden.

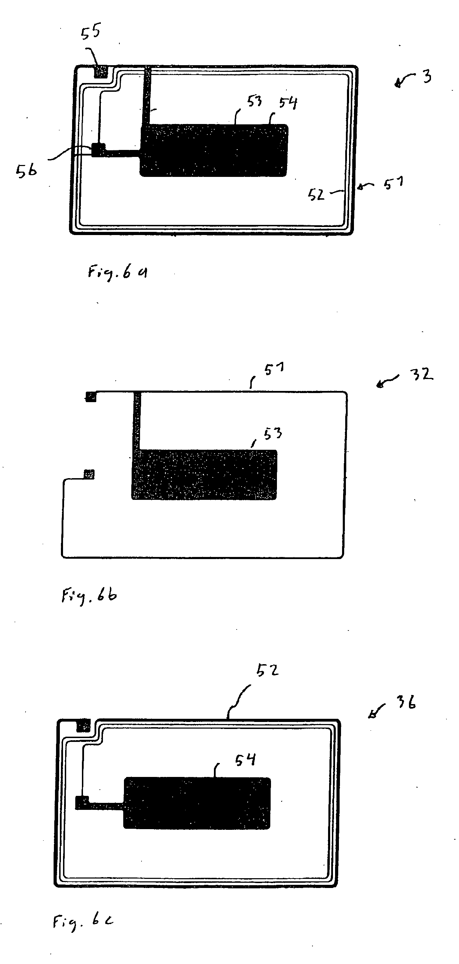

Dies wird im Folgenden anhand der Figuren Fig. 6a bis Fig. 6c erläutert.

Fig. 6a zeigt eine Draufsicht auf den Bereich 43 des Blattes 13, in welchem der LCR-Schwingkreis 3 ausgebildet ist. Die Fig. 6a zeigt hierbei die sich hierbei ergebende überlappende Anordnung der Leiterstrukturen der elektrisch leitfähigen Schicht 32 und der Leiterstrukturen der elektrisch leitfähigen Schicht 36.

Fig. 6b zeigt nun separat die Ausformung der elektrisch leitfähigen Schicht 32 mit der spulenförmigen Leiterstruktur 52 und der Kondensatorfläche 53 und Fig. 6c zeigt separat die Ausformung der elektrisch leitfähigen Schicht 36 mit der spulenförmigen Struktur 52 und der Kondensatorfläche 54. Der Bereich 34 weist hier beispielsweise eine Abmessung von 78 x 48 mm auf, die Schichtdicke der elektrisch leitfähigen Schichten 32 und 36 beträgt ca. 12 µm, die Leiterbahnbreite der spulenförmigen Leiterstrukturen 51 und 52 beträgt etwa 0,65 mm und die Beabstandung der Windungen der spulenförmigen Leiterstruktur 52 beträgt etwa 0,5 mm. Wie in Fig. 6b und Fig. 6c gezeigt, weist die spulenförmige Leiterstruktur 51 ca. 0,8 Windungen und die spulenförmige Leiterstruktur 52 etwa 3,2 Windungen auf, so dass sich bei Kopplung der elektrisch leitfähigen Schicht 32 und 36 mittels der Durchkontaktierungen 55 und/oder 56 insgesamt eine spulenförmige Leiterstruktur mit etwa 4 Windungen ergibt. Es ist auch möglich, auf die Durchkontaktierung 55 zu verzichten. Die Kondensatorflächen 53 und 54 weisen etwa eine Abmessung von 40 x 15 mm auf und sind, wie in Fig. 6a gezeigt, überdeckend angeordnet. Bei der Ausgestaltung und Verbindung der elektrisch leitfähigen Schichten 32 und 36 nach den Figuren Fig. 6a bis Fig. 6c ergibt sich ein LCR-Schwingkreis mit einer Induktivität von 3,9 µH, einer Kapazität von 105,2 pF, einer Resonanz-Frequenz von 7,3 MHz und einer Güte von 20.

Wird beispielsweise die Größe der Kondensatorflächen 53 und 54 oder auch die Anzahl der Windungen der spulenförmigen Strukturen variiert, so ergibt sich eine entsprechend andere Resonanz-Frequenz. Wird so beispielsweise die Fläche der Kondensatorflächen 53 und 54 anders gewählt, beispielsweise in einer Größe von 60 x 20 mm gewählt, so ergibt sich ein LCR-Schwingkreis 33 mit einer Induktivität von 3,9 µH, einer Kapazität von 187,7 pF und einer Resonanz-Frequenz von 7,6 MHz.

Die spulenförmigen Strukturen 51 und 52 sowie die Kondensatorflächen 53 und 54 werden nun in Abhängigkeit von der Resonanz-Frequenz des Antennen-Schwingkreises - wie oben erläutert - so gewählt, dass die Resonanz-Frequenz des LCR-Schwingkreises 3 sich von der Resonanz-Frequenz des Antennen-Schwingkreises um mehr als 10 %, mehr als 25 %, mehr als 41 % oder mehr als 50 % und/oder um mehr als 1,5 MHz, mehr als 4 MHz, mehr als 5,5 MHz oder mehr als 8 MHz, unterscheidet.

Im weiteren ist es auch möglich, dass die die spulenförmigen Leiterstrukturen 51 und 52 und/oder die die Kondensatorflächen 53 und 54 umgebenden Bereiche der elektrisch leitfähigen Schicht 32 und/oder 36 ebenfalls (musterförmig) mit dem elektrisch leitfähigen Materialen der elektrisch leitfähigen Schichten 32 bzw. 36 versehen sind. Hierzu zeigen die Figuren Fig. 7a bis Fig. 8b mehrere Ausführungsformen, bei denen diese Flächenbereiche, die Flächenbereiche 45 und 46, jeweils mit einem leitfähigen Material in einer musterförmigen Ausformung belegt sind. Es wäre hierbei auch möglich, dass nicht beide Flächenbereiche, der Flächenbereich 46 (Flächenbereich innerhalb der spulenförmigen Leiterstrukturen 51 und 52) und der Flächenbereich 45 (Flächenbereich außerhalb der spulenförmigen Leiterstrukturen 51 und 52) musterförmig mit einem elektrisch leitfähigen Material belegt sind, sondern lediglich einer dieser beiden Flächenbereiche hiermit belegt ist. Durch diese Belegung der Flächenbereiche 46 und/oder 45 mit elektrisch leitfähigem Material wie in den Fig. 7a bis 8b gezeigt, wird eine zusätzliche Dämpfung des Lesesignals des Lesegeräts erwirkt, wenn das Blatt 13 zwischen dem Lesegerät und dem Blatt 11 angeordnet ist.

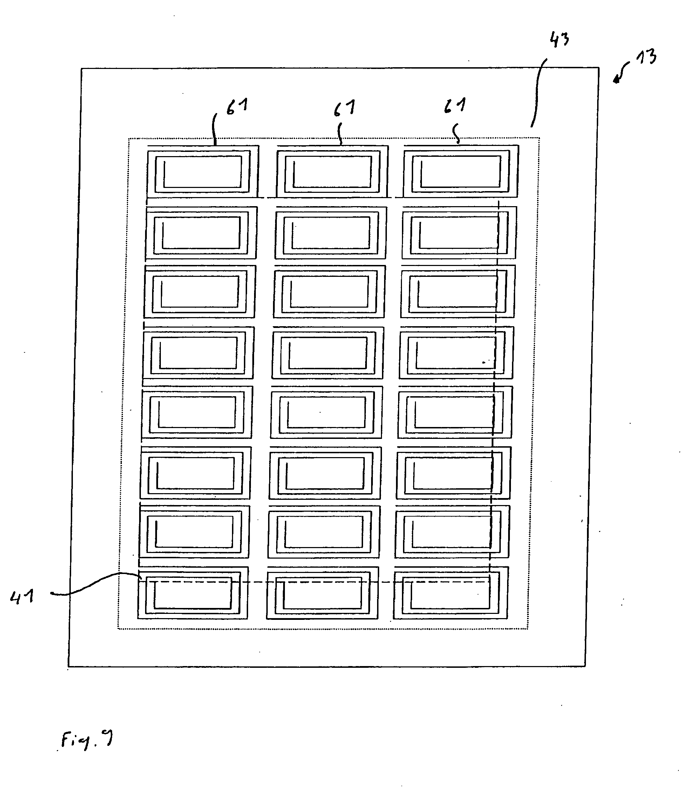

Fig. 9 zeigt eine weitere Möglichkeit der Ausgestaltung des Blattes 13. Hierbei sind in dem Bereich 43 mehrere LCR-Schwingkreise 61 angeordnet. So zeigt Fig. 9 beispielhaft eine Anordnung der LCR-Schwingkreise 61 gemäß eines zweidimensionalen Rasters, wobei die Rasterweite, d.h. die Beabstandung der Flächenschwerpunkte benachbarter LCR-Schwingkreise in die eine Richtung zwischen 20 mm und 40 mm und in die andere Richtung zwischen 40 mm und 60 mm beträgt. Die LCR-Schwingkreise sind hier beispielsweise jeweils durch eine in der elektrisch leitfähigen Schicht 32 ausgeformten spulenförmigen Struktur gebildet, wie dies in Fig. 9 dargestellt ist. Die einzelnen LCR-Schwingkreise 61 können jedoch ebenso wie oben anhand der Figuren Fig. 2 bis Fig. 8b erläutert ausgestaltet sein.

Die Resonanz-Frequenz der LCR-Schwingkreise 61 ist hierbei vorzugsweise gleich gewählt und wird - wie oben erläutert - in Bezug auf die Resonanz-Frequenz des Antennen-Schwingkreises gewählt. Weiter ist es hier auch möglich, dass die Resonanz-Frequenzen der LCR-Schwingkreise 61 unterschiedlich gewählt sind.

Die in Fig. 9 gezeigte Anordnung mit einer Vielzahl von LCR-Schwingkreisen führt hierbei zu einer besonders guten Kopplung und damit Verstimmung des Antennen-Schwingkreises. Im weiteren können bereits Abweichungen im Rahmen der Registertoleranz zu einer unterschiedlichen Verstimmung des Antennen-Schwingkreises führen, so dass sich die Verstimmung unterschiedlicher Sicherheitsdokumente aufgrund der bei der Produktion auftretenden Registerschwankungen unterscheidet und dadurch die Sicherheit weiter erhöht wird. So ist beispielhaft in Fig. 9 die Überdeckung des Bereiches 43 durch den Bereich 41 angedeutet. Wie dort erkennbar ist, variiert die Abdeckung unterschiedlicher LCR-Schwingkreise 61 durch den Bereich 41 und damit die Kopplung der Antennenstruktur 21 mit den jeweiligen LCR-Schwingkreisen 61 schon bei geringen Registerschwankungen, wodurch sich dann auch die Verstimmung des Antennen-Schwingkreises entsprechend ändert. Dieser Effekt führt zu besonders starken Änderungen der Verstimmung des Antennen-Schwingkreises, wenn sich die Resonanz-Frequenzen der LCR-Schwingkreise 61 untereinander unterscheiden.

## Patentansprüche

1. Sicherheitsdokument (1), insbesondere Reisepass, in Form eines Heftes, welches eine Vielzahl von Blätter (11, 12, 13) aufweist, die miteinander zu dem Heft verbunden sind, wobei ein erstes Blatt (11) des Sicherheitsdokuments eine Trägerschicht (20), eine in einem ersten Bereich (41) angeordnete Antennenstruktur (21) zur RF-Kommunikation und eine mit der Antennenstruktur (21) verbundene elektronische Schaltung (22) mit einer Speichereinrichtung zur Speicherung von Daten und eine mit der Antennenstruktur verbundene Kommunikationseinrichtung zur Übermittlung von in der Speichereinrichtung gespeicherten Daten mittels der Antennenstruktur (21) über eine Funkschnittstelle an ein Lesegerät aufweist, wobei ein zweites Blatt (13) des Sicherheitsdokuments eine Trägerschicht (30) und ein oder mehrere elektrisch leitfähige Schichten (32, 36) aufweist, die in einem zweiten Bereich (43) zur Ausbildung mindestens eines LCR-Schwingkreises (3, 61) ausgeformt sind, und wobei die Antennenstruktur (21) und der mindestens eine LCR-Schwingkreis (3) so auf der jeweiligen Trägerschicht angeordnet sind, dass, wenn das Heft geschlossen ist, der erste Bereich (41) des ersten Blattes (11) und der zweite Bereich (43) des zweiten Blattes (13) sich zumindest bereichsweise überlappen und der mindestens eine LCR-Schwingkreis (3) mit der Antennenstruktur (21) elektromagnetisch gekoppelt ist,
**dadurch gekennzeichnet,**
**dass** der mindestens eine LCR-Schwingkreis (3) ein oder mehrere spulenförmige Leiterstrukturen (51, 52) aufweist, welche in der elektrisch leitfähigen Schicht (52, 56) oder welche in den elektrisch leitfähigen Schichten (52, 56) ausgeformt sind und welche jeweils einen ersten Flächenbereich (44) zumindest zu 40 % umschließen, dass der mindestens eine LCR-Schwingkreis (3) eine erste Kondensatorfläche (53) aufweist, die in einer ersten der elektrisch leitfähigen Schichten (32) ausgeformt ist, und eine zweite Kondensatorfläche (54) aufweist, die in einer zweiten der elektrisch leitfähigen Schichten (36) ausgebildet ist, dass zwischen der ersten elektrisch leitfähigen Schicht (32) und der zweiten elektrisch leitfähigen Schicht (36) eine dielektrische Schicht (35, 31, 30) angeordnet ist und dass sich die erste Kondensatorfläche (53) und die zweite Kondensatorfläche (54) zumindest teilweise überlappen und dass die erste und die zweite Kondensatorfläche (53, 54) jeweils mit mindestens einer der spulenförmigen Leiterstruktur (50, 52) verbunden sind.

2. Sicherheitsdokument (1) nach Anspruch 1,
**dadurch gekennzeichnet,**
**dass** der mindestens eine LCR-Schwingkreis (3) eine Resonanzfrequenz aufweist, welche sich um mindestens 10 % von der für die RF-Kommunikation verwendeten Trägerfrequenz und/oder der Resonanzfrequenz des die Antennenstruktur umfassenden Antennenschwingkreises im offenen Zustand des Heftes unterscheidet und/oder dass die Resonanzfrequenz des mindestens einen LCR-Schwingkreises (3) zwischen 2 MHz und 12 MHz beträgt.

3. Sicherheitsdokument (1) nach nach einem der vorhergehenden Ansprüche,
**dadurch gekennzeichnet,**
**dass** die Außendimensionen des mindestens einen LCR-Schwingkreises um mindestens 5 % größer als die Außendimensionen der Antennen-Struktur sind.

4. Sicherheitsdokument (1) nach einem der vorhergehenden Ansprüche,
**dadurch gekennzeichnet,**
**dass** in den ein oder mehreren elektrisch leitfähigen Schichten (32, 36) zwei oder
mehr spulenförmige Leiterstrukturen (51, 52) und/oder drei oder mehr Kondensatorflächen ausgeformt sind, wobei die spulenförmigen Leiterstrukturen (51, 52) in verschiedenen der elektrisch leitfähigen Schichten (32, 36) ausgeformt sind und so angeordnet sind, dass sie einen gemeinsamen ersten Flächenbereich (44) umschließen oder die zwei oder mehr spulenförmige Leiterstrukturen in einer der elektrisch leitfähigen Schichten ausgebildet sind.

5. Sicherheitsdokument (1) nach einem der vorhergehenden Ansprüche,
**dadurch gekennzeichnet,**
**dass** das zweite Blatt (13) zwei oder mehr elektrisch leitfähige Schichten (32, 36) aufweist, zwischen denen zumindest eine dielektrische Schicht (35, 31, 30) angeordnet ist, welche insbesondere die Trägerschicht (30) des zweiten Blattes (13) ist.

6. Sicherheitsdokument (1) nach einem der vorhergehenden Ansprüche,
**dadurch gekennzeichnet,**
**dass** der mindestens eine LCR-Schwingkreis induktiv und/oder kapazitiv mit der Antennenstruktur (21) gekoppelt ist, wenn das Heft geschlossen ist und/oder der mindestens eine LCR-Schwingkreis über eine Leiterbahn mit der Antennenstruktur verbunden ist.

7. Sicherheitsdokument (1) nach einem der vorhergehenden Ansprüche,
**dadurch gekennzeichnet,**
**dass** die Antennenstruktur (21) eine spulenförmige Leiterstruktur aufweist, welche einen zweiten Flächenbereich (42) umschließt und die so auf der Trägerschicht (20) des ersten Blattes (11) angeordnet ist, dass sich der erste und der zweite Flächenbereich (44, 42) zumindest teilweise überdecken, wenn das Heft geschlossen ist.

8. Sicherheitsdokument (1) nach Anspruch 7,
**dadurch gekennzeichnet,**
**dass** der mindestens eine LCR-Schwingkreis mindestens eine Koppelfläche zur kapazitiven Kopplung mit einer mit der Antennenstruktur verbundenen zweiten Koppelfläche aufweist, wobei die erste Koppelfläche in der elektrisch leitfähigen Schicht des zweiten Blattes ausgeformt ist und die zweite Koppelfläche in einer elektrisch leitfähigen Schicht des ersten Blattes ausgeformt ist, und dass die erste und die zweite Koppelfläche so angeordnet sind, dass sie sich zumindest bereichsweise überdecken, wenn das Dokument geschlossen ist.

9. Sicherheitsdokument (1) nach einem der vorhergehenden Ansprüche,
**dadurch gekennzeichnet,**
**dass** die ein oder mehreren elektrisch leitfähigen Schichten des zweiten Blattes (13) in dem zweiten Bereich (43) zur Ausbildung von zwei oder mehr LCR-Schwingkreisen (61) ausgeformt sind und dass die Antennenstruktur (21) und die zwei oder mehr LCR-Schwingkreise (61) so auf derjeweiligen Trägerschicht (20, 30) angeordnet sind, dass, wenn das Heft geschlossen ist, der erste Bereich (41) des ersten Blattes (11) und der zweite Bereich (43) des zweiten Blattes (13) sich zumindest bereichsweise überlappen und die zumindest eine Teilmenge der zwei oder mehr LCR-Schwingkreise (61) mit der Antennenstruktur (21) elektromagnetisch gekoppelt ist.

10. Sicherheitsdokument (1) nach Anspruch 9,
**dadurch gekennzeichnet,**
**dass** die zwei oder mehr LCR-Schwingkreise (61) gemäß einem ein-, zwei- oder dreidimensionalen Raster auf der Trägerschicht des zweiten Blattes angeordnet sind, wobei insbesondere die Rasterweiten des Rasters in zumindest einer Raumrichtung zwischen 20 mm und 60 mm betragen und/oder die Rasterweiten des Rasters in zumindest einer Raumrichtung variieren, insbesondere zufällig variieren oder die zwei oder mehr LCR-Schwingkreise (61) die gleiche Resonanzfrequenz besitzen.

11. Sicherheitsdokument (1) nach einem der vorhergehenden Ansprüche,
**dadurch gekennzeichnet,**
**dass** die ein oder mehreren elektrisch leitfähigen Schichten (32, 36) des zweiten Blattes (13) in einem an den zweiten Bereich angrenzenden und vorzugsweise den zweiten Bereich umschließenden dritten Bereich (45, 46) zur Ausbildung eines RF-Strahlung absorbierenden Schichtbereichs ausgeformt sind, insbesondere vollflächig ausgeformt sind.

12. Sicherheitsdokument (1) nach einem der vorhergehenden Ansprüche,
**dadurch gekennzeichnet,**
**dass** das erste Blatt (11) und/oder das zweite Blatt (13) ein Deckblatt des Heftes ist, insbesondere das zweite Blatt (13) das vordere Deckblatt, welches den vorderen Teil des Einbandes des Heftes bildet, und das erste Blatt (11) das hintere Deckblatt ist, welches den hinteren Teil des Heftes bildet.

13. Sicherheitsdokument (1) nach einem der vorhergehenden Ansprüche,
**dadurch gekennzeichnet,**
**dass** das zweite Blatt (13) und/oder das erste Blatt (11) ein oder mehrere ein optisch variables Sicherheitsmerkmal ausbildende Schichten (33) aufweist, insbesondere eine Schicht mit einem mikroskopischen oder makroskopischen Oberflächen-Relief, insbesondere einem beugungsoptisch wirkenden Oberflächen-Relief oder einem Oberflächen-Relief in Form von Linsenstrukturen, Mattstrukturen oder Blaze-Gittern, ein Dünnfilmschicht-System, eine Flüssigkristallschicht oder eine Schicht mit optisch aktiven Pigmenten, insbesondere Effektpigmenten, UV- oder IR-aktivierbaren Pigmenten ist.

14. Sicherheitsdokument (1) nach einem der vorhergehenden Ansprüche,
**dadurch gekennzeichnet,**
**dass** die Antennenstruktur und der LCR-Schwingkreis auf einer gemeinsamen Kunststofffolie angeordnet sind, wobei die Kunststofffolie in einen Rücken des Sicherheitsdokumentes eingelegt ist und wobei auf einer ersten Hälfte der Kunststofffolie die Antennenstruktur angeordnet ist und auf einer zweiten Hälfte der Kunststofffolie der LCR-Schwingkreis angeordnet ist, wobei insbesondere die erste Hälfte der Kunststofffolie mit der Antennenstruktur mit einer ersten Einbandseite des Sicherheitsdokumentes verbunden, insbesondere verklebt ist, und dass die zweite Hälfte der Kunststofffolie mit dem LCR-Schwingkreis mit einer zweiten Einbandseite des Sicherheitsdokumentes verbunden, insbesondere verklebt ist.

## Claims

1. Security document (1), in particular passport, in the form of a book which has a plurality of pages (11, 12, 13) which are connected to one another to form the book, wherein a first page (11) of the security document has a carrier layer (20), an antenna structure (21) arranged in a first region (41) for RF communication and an electronic switch (22) connected to the antenna structure (21) having a memory device for storing data and a communication device connected to the antenna structure for the transmission of data stored in the memory device by means of the antenna structure (21) via a radio interface on a reader, wherein a second page (13) of the security document has a carrier layer (30) and one or more electrically conductive layers (32, 36) which are formed in a second region (43) for the formation of at least one LCR resonant circuit (3, 61), and wherein the antenna structure (21)and the at least one LCR resonant circuit (3) are arranged on the respective carrier layer such that if the book is closed, the first region (41) of the first page (11) and the second region (43) of the second page (13) at least partially overlap and the at least one LCR resonant circuit (3) is coupled electromagnetically to the antenna structure (21),
**characterised in that**,
the at least one LCR resonant circuit (3) has one or more coil-shaped conductive structures (51, 52) which are formed in the electrically conductive layer (52, 56) or which are formed in the electrically conductive layers (52, 56) and which each enclose at least 40% of a first surface region (44), that the at least one LCR resonant circuit (3) has a first capacitor surface (53) which is formed in a first of the electrically conductive layers (32) and has a second capacitor surface (54) which is formed in a second of the electrically conductive layers (36), that a dielectric layer (35, 31, 30) is arranged between the first electrically conductive layer (32) and the second electrically conductive layer (36) and that the first capacitor surface (53) and the second capacitor surface (54) overlap at least partially and that the first and the second capacitor surface (53, 54) are each connected to at least one of the coil-shaped conductive structures (50, 52).

2. Security document (1) according to claim 1,
**characterised in that**,
the at least one LCR resonant circuit (3) has a resonant frequency which differs by at least 10% from the carrier frequency used for the RF communication and/or resonant frequency of the antenna resonant circuit comprising the antenna structure, in the open state of the book, and/or that the resonant frequency of the at least one LCR resonant circuit (3) amounts to between 2 MHz and 12 MHz.

3. Security document (1) according to one of the preceding claims,
**characterised in that**,
the outer dimensions of the at least one LCR resonant circuit are at least 5% larger than the outer dimensions of the antenna structure.

4. Security document (1) according to one of the preceding claims,
**characterised in that**,
two or more coil-shaped conductive structures (51, 52) and/or three or more capacitor surfaces are formed in the one or more electrically conductive layers (32, 36), wherein the coil-shaped conductive structures (51, 52) are formed in different electrically conductive layers (32, 36) and are arranged such that they enclose a mutual first surface region (44) or the two or more coil-shaped conductive structures are formed in one of the electrically conductive layers.

5. Security document (1) according to one of the preceding claims,
**characterised in that**,
the second page (13) has two or more electrically conductive layers (32, 36), between which at least one dielectric layer (35, 31, 30) is arranged which is, in particular, the carrier layer (30) of the second page (13).

6. Security document (1) according to one of the preceding claims,
**characterised in that**,
the at least one LCR resonant circuit is coupled inductively and/or capacitively to the antenna structure (21) if the book is closed and/or the at least one LCR resonant circuit is connected to the antenna structure via a conductor path.

7. Security document (1) according to one of the preceding claims,
**characterised in that**
the antenna structure (21) has a coil-shaped conductive structure which encloses a second surface region (42) and which is arranged on the carrier layer (20) of the first page (11) such that the first and the second surface region (44, 42) is at least partially covered if the book is closed.

8. Security document (1) according to claim 7,
**characterised in that**,
the at least one LCR resonant circuit has at least one coupling surface for the capacitive coupling to a second coupling surface connected to the antenna structure, wherein the first coupling surface is formed in the electrically conductive layer of the second page and the second coupling surface is formed in an electrically conductive layer of the first page, and that the first and the second coupling surfaces are arranged such that they are at least partially covered if the document is closed.

9. Security document (1) according to one of the preceding claims,
**characterised in that**,
the one or more electrically conductive layers of the second page (13) are formed in the second region (43) for the formation of two or more LCR resonant circuits (61) and that the antenna structure (21) and the two or more LCR resonant circuits (61) are arranged on the respective carrier layer (20, 30) such that if the book is closed, the first region (41) of the first page (11) and the second region (43) of the second page (13) overlap at least in regions and the at least one sub-set of the two or more LCR resonant circuits (61) is electromagnetically coupled to the antenna structure (21).

10. Security document (1) according to claim 9,
**characterised in that**,
the two or more LCR resonant circuits (61) are arranged on the carrier layer of the second page according to a one, two or three-dimensional grid, wherein, in particular, the grid widths of the grid in a least one spatial direction amount to between 20mm and 60mm and/or the grid widths of the grid vary in at least one spatial direction, in particular vary randomly or the two or more LCR resonant circuits (61) have the same resonant frequency.

11. Security document (1) according to one of the preceding claims,
**characterised in that**,
the one or more electrically conductive layers (32, 36) of the second page (13) are formed, in particular are completely formed, in a third region (45, 46) which is adjacent to the second region and preferably encloses the second region for the formation of a layer region which absorbs RF radiation.

12. Security document (1) according to one of the preceding claims,
**characterised in that**,
the first page (11) and/or the second page (13) is a cover page of the book, in particular the second page (13) is the front cover page which forms the front part of the binding of the book, and the first page (11) is the back cover page which forms the back part of the book.

13. Security document (1) according to one of the preceding claims,
**characterised in that**,
the second page (13) and/or the first page (11) has one or more layers (33) forming an optically variable security feature, which is, in particular, a layer having a microscopic or macroscopic surface relief, in particular a surface relief which acts diffractively or a surface relief in the form of lens structures, matt structures or blaze gratings, a thin film layer system, a liquid crystal layer or a layer having optically active pigments, in particular effect pigments, UV- or IR-activatable pigments.

14. Security document (1) according to one of the preceding claims,
**characterised in that**,
the antenna structure and the LCR resonant circuit are arranged on a mutual plastic film, wherein the plastic film is inserted into a back of the security document and wherein the antenna structure is arranged on a first half of the plastic film and the LCR resonant circuit is arranged on a second half of the plastic film, wherein, in particular, the first half of the plastic film having the antenna structure is connected to a first binding side of the security document, in particular is adhered, and that the second half of the plastic film having the LCR resonant circuit is connected to a second binding side of the security document, in particular is adhered.

## Revendications

1. Document de sécurité (1), en particulier passeport, se présentant sous la forme d'un carnet, lequel présente une pluralité de feuillets (11, 12, 13), lesquels sont reliés les uns aux autres pour former le carnet, sachant qu'un premier feuillet (11) du document de sécurité présente une couche de support (20), une structure d'antenne (21), disposée dans une première zone (41), servant à la communication radiofréquence et un circuit (22) électronique relié à la structure d'antenne (21) et pourvu d'un dispositif de stockage servant à stocker des données et un dispositif de communication, relié à la structure d'antenne, servant à transmettre des données stockées dans le dispositif de stockage au moyen de la structure d'antenne (21) par l'intermédiaire d'une interface radio à un appareil de lecture, sachant qu'un deuxième feuillet (13) du document de sécurité présente une couche de support (30) et une ou plusieurs couches (32, 36) électroconductrices, lesquelles sont formées dans une deuxième zone (43) afin de réaliser au moins un circuit oscillant LCR (3, 61), et sachant que la structure d'antenne (21) et le circuit oscillant LCR (3) au moins au nombre d'un sont disposés sur la couche de support respective de telle manière que, lorsque le carnet est fermé, la première zone (41) du premier feuillet (11) et la deuxième zone (43) du deuxième feuillet (13) se chevauchent au moins par endroits et le circuit oscillant LCR (3) au moins au nombre d'un est couplé de manière électromagnétique à la structure d'antenne (21),
**caractérisé en ce que**
le circuit oscillant LCR (3) au moins au nombre d'un présente une ou plusieurs structures conductrices (51, 52) en forme de bobine, lesquelles sont formées dans la couche électroconductrice (52, 56) ou dans les couches électroconductrices (52, 56) et lesquelles renferment respectivement une première zone de surface (44) au moins à hauteur de 40%, **en ce que** le circuit oscillant LCR (3) au moins au nombre d'un présente une première face de condensateur (53), laquelle est formée dans une première couche électroconductrice parmi les couches électroconductrices (32) et présente une deuxième face de condensateur (54) qui est réalisée dans une deuxième couche électroconductrice (36) des couches électroconductrices, qu'une couche diélectrique (35, 31, 30) est disposée entre la première couche électroconductrice (32) et la deuxième couche électroconductrice (36) et que la première face de condensateur (53) et la deuxième face de condensateur (54) se chevauchent au moins en partie, et **en ce que** la première et la deuxième face de condensateur (53, 54) sont reliées respectivement à au moins une des structures conductrices (50, 52) en forme de bobine.

2. Document de sécurité (1) selon la revendication 1,
**caractérisé en ce que**
le circuit oscillant LCR (3) au moins au nombre d'un présente une fréquence de résonnance, qui se différencie d'au moins 10% de la fréquence porteuse utilisée pour la communication radiofréquence et/ou de la fréquence de résonnance du circuit oscillant d'antenne comprenant la structure d'antenne lorsque le carnet est ouvert, et/ou **en ce que** la fréquence de résonnance du circuit oscillant LCR (3) au moins au nombre d'un est comprise entre 2 MHz et 12 MHz.

3. Document de sécurité (1) selon l'une quelconque des revendications précédentes,
**caractérisé en ce que**
les dimensions extérieures du circuit oscillant LCR au moins au nombre d'un sont d'au moins 5% supérieures aux dimensions extérieures de la structure d'antenne.

4. Document de sécurité (1) selon l'une quelconque des revendications précédentes,
**caractérisé en ce que**
deux structures conductrices (51, 52) en forme de bobine ou plus et/ou trois faces de condensateur ou plus sont formées dans une ou plusieurs couches électroconductrices (32, 36), sachant que les structures conductrices (51, 52) en forme de bobine sont formées dans différentes couches électroconductrices parmi les couches électroconductrices (32, 36) et sont disposées de telle sorte qu'elles renferment une première zone de face (44) commune ou que les deux structures conductrices en forme de bobine ou plus sont réalisées dans l'une des couches électroconductrices.

5. Document de sécurité (1) selon l'une quelconque des revendications précédentes,
**caractérisé en ce que**
le deuxième feuillet (13) présente deux couches électroconductrices (32, 36) ou plus, entre lesquelles est disposée au moins une couche diélectrique (35, 31, 30), qui est en particulier la couche de support (30) du deuxième feuillet (13).

6. Document de sécurité (1) selon l'une quelconque des revendications précédentes, **caractérisé en ce que**
le circuit oscillant LCR au moins au nombre d'un est couplé à la structure d'antenne (21) de manière inductive et/ou capacitive lorsque le carnet est fermé et/ou lorsque le circuit oscillant LCR au moins au nombre d'un est relié à la structure d'antenne par l'intermédiaire d'une piste conductrice.

7. Document de sécurité (1) selon l'une quelconque des revendications précédentes,
**caractérisé en ce que**
la structure d'antenne (21) présente une structure conductrice en forme de bobine, laquelle renferme une deuxième zone de surface (42) et est disposée de telle manière sur la couche de support (20) du premier feuillet (11) que la première et la deuxième zone de face (44, 42) se recouvrent au moins en partie lorsque le carnet est fermé.

8. Document de sécurité (1) selon la revendication 7,
**caractérisé en ce que**
le circuit oscillant LCR au moins au nombre d'un présente au moins une face de couplage destinée à être couplée de manière capacitive à la deuxième face de couplage reliée à la structure d'antenne, sachant que la première face de couplage est formée dans la couche électroconductrice du deuxième feuillet et que la deuxième face de couplage est formée dans une couche électroconductrice du premier feuillet, et **en ce que** la première et la deuxième face de couplage sont disposées de telle sorte qu'elles se recouvrent au moins par endroits lorsque le document est fermé.

9. Document de sécurité (1) selon l'une quelconque des revendications précédentes,
**caractérisé en ce que**
la couche électroconductrice au moins au nombre d'une ou plusieurs couches électroconductrices du deuxième feuillet (13) est formée dans la deuxième zone (43) afin de réaliser deux circuits oscillants LCR (61) ou plus, et **en ce que** la structure d'antenne (21) et les deux circuits oscillants LCR (61) ou plus sont disposés sur la couche de support (20, 30) respective de telle manière que, lorsque le carnet est fermé, la première zone (41) du premier feuillet (11) et la deuxième zone (43) du deuxième feuillet (13) se chevauchent au moins par endroits et que la quantité partielle au moins au nombre d'une des deux circuits oscillants LCR (61) ou plus sont couplées de manière électromagnétique à la structure d'antenne (21).

10. Document de sécurité (1) selon la revendication 9,
**caractérisé en ce que**
les deux circuits oscillants LCR (61) ou plus sont disposés sur la couche de support du deuxième feuillet selon un réseau à une, deux ou trois dimensions, sachant qu'en particulier les largeurs de réseau du réseau sont comprises dans au moins une direction spatiale entre 20 mm et 60 mm, et/ou que les largeurs de réseau du réseau varient dans au moins une direction spatiale, en particulier varient de manière aléatoire, ou que les deux circuits oscillants LCR (61) ou plus comportent la même fréquence de résonnance.

11. Document de sécurité (1) selon l'une quelconque des revendications précédentes,
**caractérisé en ce que**
la couche électroconductrice au moins au nombre d'une ou plusieurs couches électroconductrices (32, 36) du deuxième feuillet (13) est formée dans une troisième zone (45, 46) jouxtant la deuxième zone et renfermant de préférence la deuxième zone, afin de former une zone stratifiée absorbant un rayonnement radiofréquence, est formée en particulier sur toute la surface.

12. Document de sécurité (1) selon l'une quelconque des revendications précédentes,
**caractérisé en ce que**
le premier feuillet (11) et/ou le deuxième feuillet (13) constituent une page de garde du carnet, en particulier le deuxième feuillet (13) constitue la page de garde avant, qui forme la partie avant de la reliure du carnet, et le premier feuillet (11) constitue la quatrième de couverture, laquelle forme la partie arrière du carnet.

13. Document de sécurité (1) selon l'une quelconque des revendications précédentes,
**caractérisé en ce que**
le deuxième feuillet (13) et/ou le premier feuillet (11) présentent une ou plusieurs couches (33) formant une caractéristique de sécurité à variation optique, en particulier une couche comprenant un relief en surface microscopique ou macroscopique, en particulier un relief en surface à diffraction optique ou un relief en surface se présentant sous la forme d'une structure de lentille, des structures mates ou des réseaux à échelette, un système de couche de film fin, une couche de cristaux liquides ou une couche comprenant des pigments actifs optiquement, en particulier des pigments à effet, des pigments activables sous l'action d'UV ou d'IR.

14. Document de sécurité (1) selon l'une quelconque des revendications précédentes,
**caractérisé en ce que**
la structure d'antenne et le circuit oscillant LCR sont disposés sur un film en plastique commun, sachant que le film en plastique est placé au verso du document de sécurité et sachant que la structure d'antenne est disposée sur une première moitié du film en plastique et que le circuit oscillant LCR est disposé sur une deuxième moitié du film en plastique, sachant en particulier que la première moitié du film en plastique est reliée, en particulier est collée, à la structure d'antenne à 1"aide d'un premier côté de reliure du document de sécurité, et **en ce que** la deuxième moitié du film en plastique est reliée, en particulier collée, au circuit oscillant LCR à l'aide d'un deuxième côté de reliure du document de sécurité.
